Europäisches Patentamt

European Patent Office

Office européen des brevets

(11) Veröffentlichungsnummer: **0 487 004 A1**

# EUROPÄISCHE PATENTANMELDUNG

(21) Anmeldenummer: **91119663.2**

(22) Anmeldetag: **18.11.91**

(51) Int. Cl.⁵: **F16J 15/12**

(30) Priorität: **19.11.90 DE 4036864**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **REINZ-DICHTUNGS-GMBH**
**Reinzstrasse 3-7**
**W-7910 Neu-Ulm(DE)**

(72) Erfinder: **Ludwig, Josef**
**Abtstrasse 33**
**W-7908 Niederstotzingen(DE)**
Erfinder: **Ouick, Lothar**
**Hauptstrasse 44**
**W-7916 Nersingen/Strass(DE)**
Erfinder: **Gladen, Rolf, Dr.**
**Mühlhausstrasse 6**
**W-7405 Dettenhausen(DE)**

(74) Vertreter: **Weber, Otto Ernst, Dipl.-Phys. et al**
**Weber & Heim Hofbrunnstrasse 36**
**W-8000 München 71(DE)**

(54) **Zylinderkopfdichtung.**

(57) Eine Zylinderkopfdichtung mit einem flachen Grundkörper (1) aus Weichstoffmaterial, in dem zumindest ein Brennraumdurchgang (6) ausgebildet ist, dessen Rand mit einem Metallbördel eingefaßt ist. Der herstellungsbedingt zwischen der Stirnwand des eingefaßten Grundkörperrandes und der Innenwandung der Bördelnase (5)des Metallbördels verbleibende Hohlraum (3) ist erfindungsgemäß mit einem speziellen Werkstoff (4) gefüllt. Die Steifigkeit dieses Werkstoffs (4) und sein spezifisches Gewicht sind so gewählt, daß eine Resonanz des Metallbördels sowie ein Flattern der Bördelnase (5) unter dynamischer Belastung im Praxisbetrieb verhindert werden. Außerdem ist dieser Werkstoff (4) hochtemperaturbeständig und wärmeleitend, so daß Rißbildungen im Material des Metallbördels aufgrund von Thermospannungen zwischen der stark erhitzten Bördelnase (5) und den Bördeleinfassungsschenkeln (2) ebenso verhindert werden wie Rißbildungen aufgrund dynamischer Beanspruchungen der Zylinderkopfdichtung im Bereich des Metallbördels.

Fig. 1

EP 0 487 004 A1

Die Erfindung betrifft eine Zylinderkopfdichtung der im Oberbegriff des Anspruchs 1 angegebenen Art.

Derartige Zylinderkopfdichtungen weisen im Bereich der Brennraumdurchgänge Einfassungen in Gestalt eines Metallbördels auf, der dazu dient, das Weichstoffmaterial des flachen Dichtungsgrundkörpers vor hohen Temperaturen und Verbrennungsabgasen zu schützen. Außerdem dient dieser Metallbördel der Erzielung örtlich hoher Flächenpressungen im Bereich der Brennraumdurchgänge. Es hat sich jedoch erwiesen, daß es bei bestimmten Einsatzfällen dieser Zylinderkopfdichtung schon nach relativ kurzen Motorlaufzeiten zu Brüchen des Metallbördels kommt.

Untersuchungen haben ergeben, daß diese Brüche im Metallbördel zurückzuführen sind auf den Hohlraum, der bei der Umbördelung des Brennraumdurchgangs in der Zylinderkopfdichtung zwischen der Stirnwand des vom Metallbördel eingefaßten Randes des Grundkörpers und der an diese Stirnwand angrenzenden Innenwandung der Bördelnase des Metallbördels herstellungsbedingt verbleibt. Dieser Hohlraum bewirkt eine Wärmeisolation zwischen der heißen Bördelnase, welche in einem Verbrennungsmotor voll den Verbrennungsgasen ausgesetzt ist und dem Weichstoffmaterial des Dichtungsgrundkörpers. Das heißt, die Bördelnase weist wesentlich höhere Betriebstemperaturen auf als die Einfassungschenkel des Metallbördels, welche mit relativ hoher Flächenpressung vollständig an den gekühlten Motorbauteilen anliegen, so daß eine Wärmeabfuhr von den Bördeleinfassungsschenkeln zu diesen Motorbauteilen hin stattfinden kann. Die unterschiedlichen Temperaturen der im Betrieb heißen Bördelnase und der gekühlten Schenkel des Metallbördels führen zu Thermospannungen in dem Metallbördel. Diese Thermospannungen sind naturgemäß konzentriert auf den Übergang zwischen den Einfassungschenkeln und der Bördelnase.

Neben dieser thermischen Belastung ist der Metallbördel den dynamischen Belastungen der umgebenden Motorbauteile ausgesetzt. Auch diese dynamischen Belastungen in Gestalt von Schwingungen sind größtenteils konzentriert auf den Übergang der Einfassungschenkel des Metallbördels zur Bördelnase. Charakteristisch für diese Schwingungsbelastung des Metallbördels sind radial umlaufende Brüche im Übergangsbereich zwischen den Einfassungschenkeln und der Bördelnase.

Schließlich unterliegt der Metallbördel noch einer weiteren dynamischen Belastung, aufgrund des in einem Verbrennungsmotor charakteristischerweise auftretenden pulsierenden Innendrucks, der im ungünstigsten Fall zu einem Flattern der Bördelnase des Metallbördels führt.

Zusammenfassend ist also festzustellen, daß sich die Gesamtbeanspruchung der in Rede stehenden Zylinderkopfdichtung im Bereich des Metallbördels zusammensetzt aus einer thermischen Belastung, einer dynamischen Belastung aufgrund von Schwingungen der die Dichtung umgebenden Motorbauteile und einer dynamischen Belastung, die verursacht ist durch den pulsierenden Innendruck von Verbrennungsmotoren. Die genannten Beanspruchungsarten führen zur Rißausbildung im Material des Metallbördels, der infolge dieser Belastung zerbricht, wodurch die Zylinderkopfdichtung ihre Dichtfunktion verliert.

Der vorliegenden Erfindung liegt die Aufgabe zugrunde, eine Zylinderkopfdichtung der eingangs genannten Art zu schaffen, die auch nach längerem bestimmungsgemäßen Einsatz ihre Dichtungsfunktion beibehält.

Gelöst wird diese Aufgabe durch die kennzeichnenden Merkmale des Anspruchs 1. Vorteilhafte Weiterbildungen der Erfindung sind in den Unteransprüchen angegeben.

Demnach besteht die Erfindung darin, den herstellungsbedingten Hohlraum im Bereich der Bördelnase des Metallbördels mit einem speziellen Werkstoff auszufüllen, der eine Reihe von charakteristischen Eigenschaften aufweist, welche im Vergleich zum Stand der Technik zu einer entscheidend verlängerten Standzeit der in Rede stehenden Dichtung führen.

Aufgrund der vollständigen Füllung des herstellungsbedingten Bördelhohlraums mit einem hochtemperaturbeständigen und wärmeleitenden Werkstoff findet bei der erfindungsgemäß ausgebildeten Zylinderkopfdichtung eine Wärmeabfuhr von der im Betrieb hocherhitzten Bördelnase über die Bördelfüllung zum Weichstoff des Dichtungsgrundkörpers hin statt. Diese Wärmeabfuhr bewirkt eine wesentliche Reduzierung der Temperaturdifferenz zwischen den von Motorbauteilen gekühlten Bördeleinfassungsschenkeln und der den Verbrennungsgasen ausgesetzten Bördelnase. Mit anderen Worten wird die Thermospannung am Übergangsbereich Bördeleinfassungsschenkel/Bördelnase durch die erfindungsgemäß vorgesehene Füllung so weit herabgesetzt, daß eine Rißbildung im Material des Metallbördels aufgrund der Thermospannung zwischen Bördeleinfassungsschenkel und Bördelnase minimiert ist.

Weiterhin weist der Werkstoff der erfindungsgemäß vorgesehenen Füllung ein Dämpfungsverhalten auf, mit welchem eine Resonanz des Metallbördels insbesondere im Übergangsbereich zwischen den Einfassungschenkeln und der Bördelnase aufgrund der Schwingungsbeanspruchung des Metallbördels durch angrenzende Motorbauteile unterdrückt wird. Mit anderen Worten wird das Schwingungsverhalten des Metallbördels durch die in dieser eingebrachte Füllung soweit verändert oder verstimmt, daß eine Resonanz bei der Schwingung des Bördelmaterials nicht auftritt, bei welcher eine Rißbildung im Material des Metallbördels besonders ausgeprägt ist.

Durch die erfindungsgemäß vorgesehene Steifigkeit der in den Metallbördel eingebrachten Füllung wird ein Abstützeffekt für die Bördelnase erreicht, durch welchen verhindert wird, daß die Bördelnase aufgrund des pulsierenden Innendrucks eines Verbrennungsmotors nicht zum Flattern angeregt wird. Aufgrund der Unterdrückung dieser Flatterbewegung sowie aufgrund der erfindungsgemäß bewirkten Unterdrückung von Resonanzen wird erreicht, daß die dynamische Gesamtbeanspruchung des Metallbördels entscheidend herabgesetzt ist.

Aufgrund der erfindungsgemäß drastisch reduzierten Gesamtbeanspruchung des Metallbördels ergibt sich eine Standzeit für die in Rede stehende Zylinderkopfdichtung, welche diejenige von herkömmlichen Zylinderkopfdichtungen mit Metallbördel im Bereich des Brennstoffdurchgangs deutlich übertrifft.

Um die Dichtungseigenschaften der in Rede stehenden Zylinderkopfdichtung mit Einbringen der erfindungsgemäßen Füllung in den Bereich der Bördelnase des Metallbördels nicht zu verschlechtern, ist es erfindungsgemäß vorgesehen, daß die Füllung eine spezifische Dichte aufweist, die so niedrig ist, daß die notwendige Kompressibilität der Dichtung durch die Füllung nicht beeinträchtigt ist.

Grundsätzlich kommen als Werkstoff für die erfindungsgemäß vorgesehene Füllung des herstellungsbedingten Hohlraums in dem Metallbördel eine Vielzahl von Werkstoffen in Betracht. Insbesondere mit Hinblick auf eine erleichterte Einbringung der Füllung in den Bördelhohlraum eignen sich für die Füllung besonders gut Werkstoffe, die unter Wärmezufuhr expandierbar sind, wie beispielsweise expandierbares Graphit. Ein solcher expandierbarer Werkstoff kann entweder ganzflächig oder auch nur gezielt örtlich, nämlich vorwiegend im Bördelnasenbereich an der Innenseite des Metallbördels aufgebracht werden. Nach dem Herstellen des Metallbördels, also nach dem Bördeln des Brennstoffdurchgangs in der Zylinderkopfdichtung wird durch eine entsprechende Temperaturbehandlung das Expandieren des expandierbaren Werkstoffes ausgelöst, so daß der zwangsläufig herstellungsbedingte Hohlraum im Bördel nachträglich vollständig mit dem Expandat ausgefüllt ist.

In ähnlicher Weise eignet sich auch unter Temperaturzufuhr blähbares Glimmermaterial für die Füllung des Metallbördels.

Zur Erhöhung der Wärmeleitfähigkeit sowie zur Verbesserung der Schwingungsdämpfungseigenschaft der erfindungsgemäß vorgesehenen Füllung, insbesondere einer Füllung in Gestalt eines expandierbaren Werkstoffes, ist es vorteilhafterweise vorgesehen, in die Füllung zusätzliche Füllstoffe einzubringen. Besonders geeignet sind hierzu Füllstoffe blättchenförmiger oder faserförmiger Struktur. Vorteilhaft ist die Verwendung zusätzlicher Füllstoffe auch mit Hinblick auf eine gezielte Abstimmung der Füllungseigenschaften. Füllstoffe in Gestalt von Mikrohohlkugeln haben dabei zusätzlich den Vorteil, daß sie unter hoher Last zusammenbrechen und so die Kompressibilität der Füllung erhöhen. Diese Mikrohohlkugeln dienen also gewissermaßen als Reserve für den Fall, daß es durch Fertigungstoleranzen bei voll ausgefülltem Bördelhohlraum zu überhöhten Kräften für die Dichtungsanpressung kommen sollte.

Für die erfindungsgemäß vorgesehene Füllung geeignete Werkstoffe, insbesondere expandierbare Werkstoffe liegen zumeist in Pulverform vor und sind deshalb nur mit großem Aufwand gleichmäßig in einem Bördelhohlraum geringer Abmessung einbringbar. Außerdem entstehen beim Umgang mit dem Bördelausgangsmaterial sowie beim Umförmen des zunächst L-förmigen Blechs in die U-förmige Endgestalt Probleme mit pulverförmigen Werkstoffen. Aus diesem Grunde ist es vorteilhafterweise vorgesehen, die Füllung mit einem Silikonbinder oder einem Kontaktkleber an dem für den Metallbördel vorgesehenen Ausgangsblech anzubringen.

Weiterhin ist es vorteilhafterweise vorgesehen, dem für die Füllung vorgesehenen Werkstoff ein hochtemperaturbeständiges Bindemittel beizumischen. Insbesondere bei der Verwendung expandierbarer Werkstoffe für die Füllung binden Kunstharze diesen Werkstoff und verbessern ihn zusätzlich mit Hinblick auf die Wärmeleitfähigkeit und die Fähigkeit, Schwingungen zu dämpfen. Bevorzugt sind hochtemperaturbeständige Bindemittel wie beispielsweise reaktives Kunstharz, da diese Bindemittel erst bei höheren Temperaturen reagieren, so daß die Werkstoffe, insbesondere der expandierbare Werkstoff genügend Zeit hat, den Hohlraum auszufüllen, bevor die chemische Reaktion der Harze und damit die Stabilisierung der Füllmasse ausgelöst wird.

Durch die Verwendung unterschiedlicher Anteile von expandierbaren Werkstoffen, Füllstoffen und Bindemitteln ist es vorteilhafterweise möglich, eine abgestufte Härteskala für diese Füllmassen zu realisieren, wodurch die erfindungsgemäß vorgesehene Füllung dem jeweiligen Anwendungsfall angepaßt werden kann.

Nachfolgend soll die Erfindung anhand der Zeichnungen näher erläutert werden; in diesen zeigen:

Fig. 1 eine Schnittansicht der erfindungsgemäßen Zylinderkopfdichtung im Bereich des umbördelten Brennstoffdurchgangs vor der vollständigen Ausfüllung des Bördelhohlraums im Bereich der Bördelnase und

Fig. 2 die Zylinderkopfdichtung von Fig. 1 mit vollständig ausgefülltem Hohlraum.

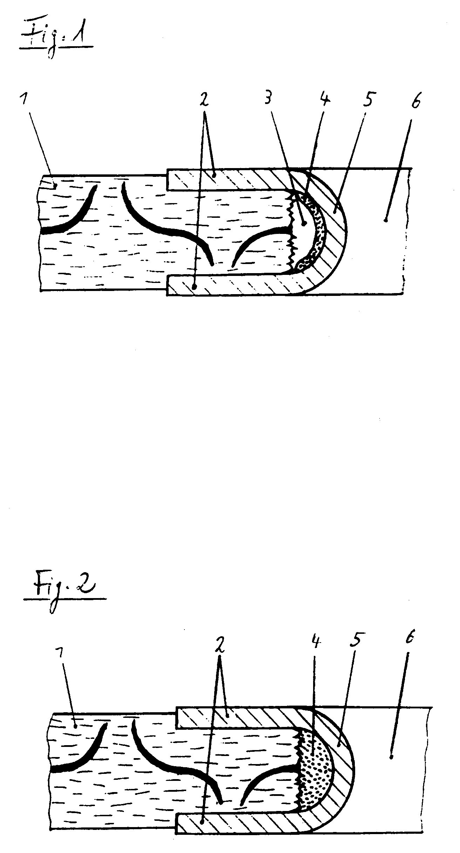

Die in den Fig. 1 und 2 dargestellte Zylinderkopfdichtung besteht aus einem flachen Grundkörper 1 aus Weichstoffmaterial, das mit Spießblechen verstärkt ist. Der Rand des Brennraumdurchgangs 6 in dem Grundkörper 1 ist mit einem Metallbördel eingefaßt, der aus zwei Einfassungsschenkeln 2 und einem diese beiden Schenkel miteinander verbindenden gekrümmten Bereich, der sog. Bördelnase 5 besteht.

Bedingt durch die Herstellung des U-förmigen Bördels aus einem L-förmigen Blech durch Bördeln dieses Blechs und Aufpressen desselben auf das Weichstoffmaterial des flachen Grundkörpers 1 im Bereich des jeweiligen Brennraumdurchgangs 6 kommt es zur Ausbildung eines Hohlraums zwischen der Stirnwand des von dem Metallbördel eingefaßten Grundkörpers 1 und der an diese Stirnwand angrenzenden Innenwandung der Bördelnase 5. Dieser Hohlraum 3 (siehe Fig. 1) ist bei der einsatzfähigen Zylinderkopfdichtung gemäß Fig. 2 vollständig ausgefüllt mittels einer Füllung 4 aus einem expandierbaren Werkstoff. Dieser Werkstoff 4 ist auf das L-förmige Ausgangsblech des U-förmigen Metallbördels ganzflächig oder wie im dargestellten Ausführungsbeispiel örtlich im Bereich der Bördelnase 5 innenseitig aufgebracht (siehe Fig. 1). Nach der Herstellung des Metallbördels, also nach dem bestimmungsgemäßen Bördeln des L-förmigen Ausgangsblechs in die U-förmige Gestalt zur Einfassung des Weichstoffmaterials des Grundkörpers 1 erfolgt eine Temperaturbehandlung zugunsten einer Expansion des expandierbaren Werkstoffes, so daß dieser in Gestalt einer Füllung 4 den herstellungsbedingten Hohlraum 3 vollständig ausfüllt. Ausgefüllt ist dabei auch die Struktur der Stirnseite des von dem Metallbördel eingefaßten Grundkörperrandes, die bedingt ist durch die Rauhigkeit des Weichstoffmaterials. Aufgrund dieser vollständigen Ausfüllung des Hohlraums 3 mit dem Expandat 4 wird beim bestimmungsgemäßen Einsatz der Zylinderkopfdichtung in einem Verbrennungsmotor eine Wärmeabfuhr von dem Expandat 4 zum Weichstoffmaterial des Grundkörpers 1 gewährleistet, die hinreicht, um die Temperaturdifferenz zwischen den Einfassungsschenkeln 2 des Bördels und der Bördelnase 5 so weit zu reduzieren, daß keine nennenswerte Thermospannung auftritt am Übergangsbereich der Schenkel 2 zur Bördelnase 5.

Außerdem wird das Schwingungsverhalten der Einfassungsschenkel 2 aufgrund der Dämpfungseigenschaft des Expandats 4 so weit verändert, daß beim bestimmungsgemäßen Einsatz der Zylinderkopfdichtung keine Resonanz auftritt. Zusätzlich wird ein Flattern der Bördelnase 5 aufgrund des pulsierenden Innendrucks im Verbrennungsmotor durch den Abstützeffekt des Expandates 4 verhindert.

Geeignet als Werkstoff für die Füllung 4 ist beispielsweise expandierbares Graphit oder unter Temperatureinwirkung blähbares Glimmermaterial, wobei dieser Werkstoff gegebenenfalls zusätzlich mit Füllstoffen versehen ist, um die thermische Eigenschaft, die Dämpfungseigenschaft und die Steifigkeit des Werkstoffs gezielt für den jeweiligen Praxisbetrieb einstellen zu können.

**Patentansprüche**

1. Zylinderkopfdichtung mit einem flachen Grundkörper aus Weichstoffmaterial, in dem zumindest ein Brennraumdurchgang ausgebildet ist, dessen Rand mit einem Metallbördel einfaßt ist, wobei zwischen der Stirnwand des vom Metallbördel eingefaßten Randes des Grundkörpers und der an diese Stirnwand angrenzenden Innenwandung der Bördelnase des Metallbördels herstellungsbedingt ein Hohlraum verbleibt, **dadurch gekennzeichnet,** daß der Hohlraum (3) mit einem Werkstoff vollständig ausgefüllt ist, und daß der Werkstoff dieser Füllung (4)

   a) hochtemperaturbeständig und wärmeleitend ist,

   b) eine spezifische Dichte aufweist, die so niedrig ist, daß die Kompressibilität der Dichtung nicht beeinträchtigt ist und

   c) ein Dämpfungsverhalten und eine Steifheit aufweist, die geeignet sind, eine Resonanz des Metallbördel (2, 5) sowie ein Flattern der Bördelnase (5) unter dynamischer Belastung im Praxisbetrieb zu verhindern.

2. Zylinderkopfdichtung nach Anspruch 1, **dadurch gekennzeichnet,** daß die Füllung (4) aus einem bei Wärmezufuhr expandierbaren Werkstoff besteht.

3. Zylinderkopfdichtung nach Anspruch 2, **dadurch gekennzeichnet,** daß der Werkstoff expandierbares Graphit ist.

4. Zylinderkopfdichtung nach Anspruch 1, **dadurch gekennzeichnet,** daß die Füllung (4) aus einem bei Wärmezufuhr blähbaren Glimmermaterial besteht.

5. Zylinderkopfdichtung nach Anspruch 2 bis 4, **dadurch gekennzeichnet,** daß in der Füllung (4) zusätzlich Füllstoffe enthalten sind.

6. Zylinderkopfdichtung nach Anspruch 5, **dadurch gekennzeichnet,** daß die Füllstoffe eine blättchenförmige Struktur aufweisen.

7.  Zylinderkopfdichtung nach Anspruch 5, **dadurch gekennzeichnet,** daß die Füllstoffe eine faserförmige Struktur aufweisen.

8.  Zylinderkopfdichtung nach Anspruch 5, **dadurch gekennzeichnet,** daß die Füllstoffe aus Mikrohohlkugeln bestehen.

9.  Zylinderkopfdichtung nach einem der Ansprüche 2 bis 8, **dadurch gekennzeichnet,** daß die Füllung (4) aus einer Mischung unterschiedlicher Werk- und Füllstoffe besteht.

10. Zylinderkopfdichtung nach einem der Ansprüche 1 bis 9, **dadurch gekennzeichnet,** daß die Füllung (4) mit einem Silikonbinder eingebracht ist.

11. Zylinderkopfdichtung nach einem der Ansprüche 1 bis 9, **dadurch gekennzeichnet,** daß die Füllung (4) mit einem Kontaktkleber angebracht ist.

Fig. 1

Fig. 2

Europäisches Patentamt

# EUROPÄISCHER RECHERCHENBERICHT

Nummer der Anmeldung

EP 91 11 9663

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 214 377 (GOETZE AG) | 1 | F16J15/12 |
| A | * das ganze Dokument * | 3,5,7,9 | |
| | --- | | |
| A | EP-A-0 197 301 (BRUGMANN GMBH) | 1-2,4,10 | |
| | * Zusammenfassung; Ansprüche 1,4; Abbildungen * | | |
| | --- | | |
| A | US-A-4 049 856 (ADAMS) | 5,8, 10-11 | |
| | * Spalte 2, Zeile 25 - Zeile 36 * | | |
| | ----- | | |

| | |
|---|---|
| | RECHERCHIERTE SACHGEBIETE (Int. Cl.5) |
| | F16J |

Der vorliegende Recherchenbericht wurde für alle Patentansprüche erstellt

| Recherchenort | Abschlußdatum der Recherche | Prüfer |
|---|---|---|
| DEN HAAG | 05 FEBRUAR 1992 | NARMINIO A. |

EPO FORM 1503 03.82 (P0403)